# EUROPÄISCHE PATENTSCHRIFT

(11) **EP 1 380 094 B1**
(45) Veröffentlichungstag und Bekanntmachung des Hinweises auf die Patenterteilung: **18.01.2006**
(21) Anmeldenummer: 02800062.8
(22) Anmeldetag: 21.08.2002
(51) Int. Cl.: H02K 29/03, H02K 16/00, H02K 21/16

(54) **ELEKTROMOTOR, INSBESONDERE ELEKTRONISCH KOMMUTIERTER GLEICHSTROMMOTOR**
ELECTRIC MOTOR, ESPECIALLY AN ELECTRONICALLY COMMUTATED D.C. MOTOR
MOTEUR ELECTRIQUE, EN PARTICULIER MOTEUR A COURANT CONTINU COMMUTE ELECTRONIQUEMENT

(30) Priorität: 25.09.2001 DE 10147073
(43) Veröffentlichungstag der Anmeldung: 14.01.2004
(73) Patentinhaber: MINEBEA Co., Ltd., Kitasaku-gun, Nagano-ken (JP)
(72) Erfinder: HANS, Helmut, 78112 St. Georgen (DE)
(74) Vertreter: Liesegang, Eva
(86) Internationale Anmeldenummer: PCT/EP2002/009359
(87) Internationale Veröffentlichungsnummer: WO 2003/030332

(56) Entgegenhaltungen:
- EP-A- 1 087 502
- US-A- 6 042 349
- PATENT ABSTRACTS OF JAPAN vol. 014, no. 584 (E-1018), 27. Dezember 1990 (1990-12-27) & JP 02 254954 A (HITACHI LTD), 15. Oktober 1990 (1990-10-15)

## Beschreibung

Die Erfindung betrifft einen Elektromotor, insbesondere einen elektronisch kommutierten Gleichstrommotor, mit einem Stator und einem Rotor, die zu einer Längsachse des Elektromotors konzentrisch angeordnet sind. Der Stator weist mehrere Statorpole und mehrere Phasenwicklungen auf, und der Rotor weist einen Permanentmagneten mit wenigstens einem Magnetpolpaar auf, das den Phasenwicklungen zugeordnet ist.

Die Erfindung betrifft das Gebiet der bürstenlosen Elektromotoren mit Permanentmagneten und insbesondere der Gleichstrommotoren, die als Innenläufermotoren oder Außenläufermotoren konfiguriert sein können. Innenläufermotoren weisen eine Rotorbaugruppe auf, die eine Rotorwelle und einen oder mehrere auf der Rotorwelle angeordnete Permanentmagneten umfaßt, sowie eine Statorbaugruppe, die einen z.B. aus Blechen zusammengesetzten Stator mit Phasenwicklungen aufweist. Die Rotorbaugruppe ist koaxial, konzentrisch in die Statorbaugruppe eingefügt. Bei einem Außenläufermotor umgibt die Rotoreinheit den Stator konzentrisch.

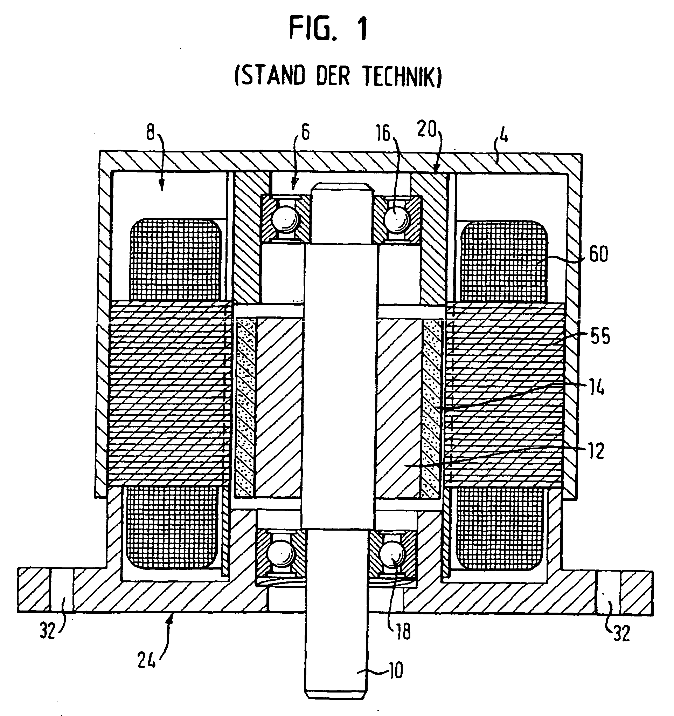

Fig. 1 zeigt schematisch den grundsätzlichen Aufbau eines Innenläufermotors, mit einem Gehäuse 4, in dem die Statorbaugruppe 8 die Rotorbaugruppe 6 sowie Lager 16, 18 zur drehbaren Lagerung der Rotorbaugruppe enthalten sind. Die Statorbaugruppe 8 umfaßt Statorbleche 55 und Phasenwicklungen 60 und grenzt einen Innenraum ein, in den die Rotorbaugruppe 6 eingeschoben werden kann. Die Lager 16, 18 für die Rotorbaugruppe können beispielsweise in Flansche 24 oder Stimkappen 20 des Motorgehäuses 4 integriert werden.

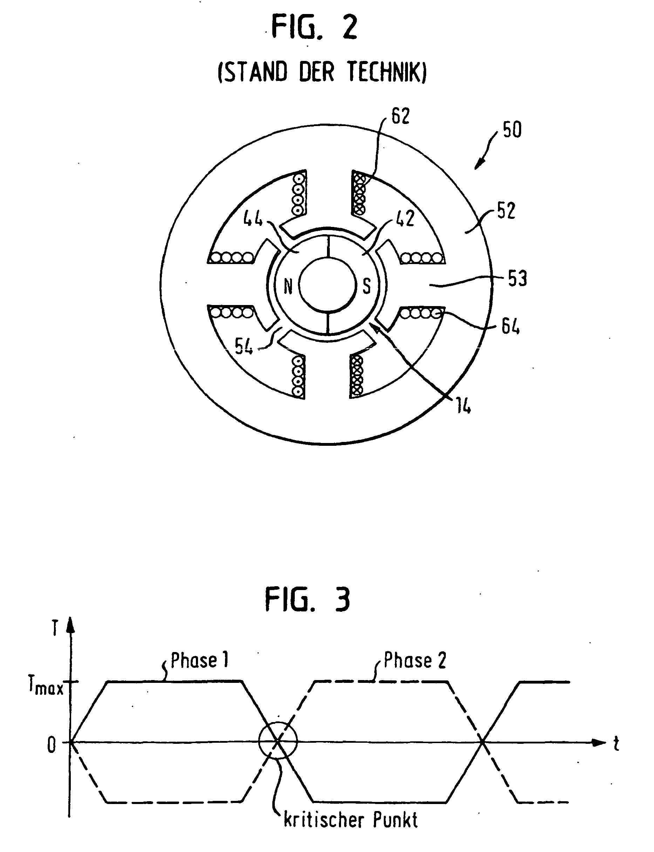

Fig. 2 zeigt schematisch eine Schnittdarstellung durch einen beispielhaften zweiphasigen Gleichstrommotor mit einer Statorbaugruppe und einer konzentrisch von der Statorbaugruppe eingeschlossenen Rotorbaugruppe. Die Statorbaugruppe ist schematisch durch ein Statorblech 52 dargestellt, das vier elektrische Pole 53 und vier Statomuten 54 aufweist, wobei zwei Phasenwicklungen 62, 64 des zweiphasigen Gleichstrommotors gleichmäßig auf die elektrischen Pole 53 verteilt gewickelt sind. Die elektrischen Pole werden auch als Hammer bezeichnet. Die Anzahl der elektrischen Pole ist durch die Anzahl der Hammer bzw. die Anzahl der Statomuten der Statorbaugruppe bestimmt. Die Rotorbaugruppe ist schematisch durch einen Permanentmagneten 14 mit einem magnetischen Polpaar 42, 44 dargestellt.

Bei der gezeigten Ausführungsform liegen die Wicklungen 62, 64 der ersten Phase und der zweiten Phase jeweils einander gegenüber, wie in Fig. 2 gezeigt. Grundsätzlich ist der geometrische Versatz der Phasen gleich 360° elektrisch geteilt durch Phasenzahl und somit bei der vorliegenden Ausführungsform gleich 360°elektrisch ÷ 2 = 180° elektrisch. Die Anzahl der zu einer Phase gehörenden Wicklungen 62, 64 ist somit gleich der Anzahl der Statornuten dividiert durch die Anzahl der Phasen.

Die Phasen des Gleichstrommotors gemäß der in Fig. 2 gezeigten Ausführungsform erzeugen bei konstanter Bestromung die in Fig. 3 gezeigten Drehmomente.

Wie in Fig. 3 gezeigt, gibt es bei zweiphasigen Gleichstrommotoren eine Rotorposition, bei der weder durch Bestromung der Phase 1, noch durch Bestromung der Phase 2 ein Drehmoment erzeugt werden kann. Diese Situation ist in Fig. 3 mit "kritischer Punkt" bezeichnet. Das von dem zweiphasigen Gleichstrommotor abgegebene Drehmoment T schwankt zwischen 0 und einem Maximalwert Tₘₐₓ, wobei diese Schwankung als "Torque-Ripple" oder Drehmomentwelligkeit bei Bestromung bezeichnet wird.

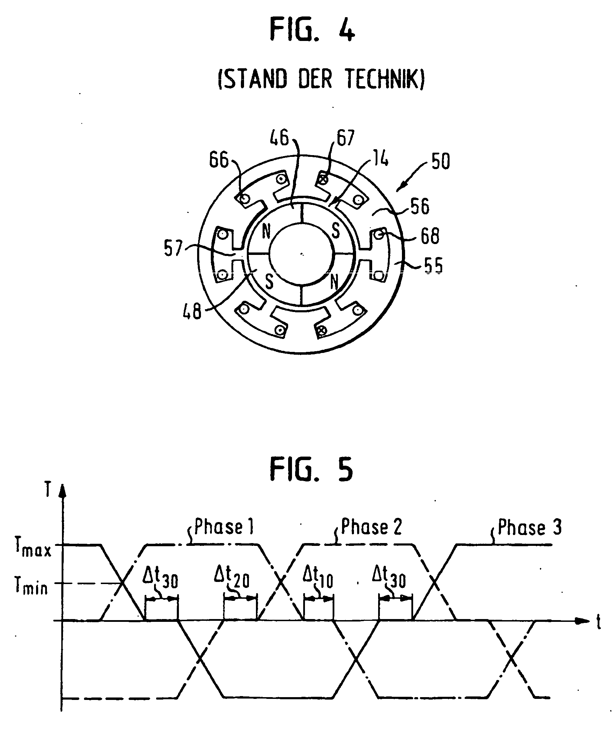

Fig. 4 zeigt eine schematische Schnittdarstellung durch einen dreiphasigen Gleichstrommotor mit einer Statorbaugruppe, die sechs elektrischen Pole 56, und entsprechend sechs Statomuten 57 aufweist, sowie eine koaxial in dieser angeordneten Rotorbaugruppe mit einem Permanentmagneten 14 mit zwei magnetischen Polpaaren 46, 48. Entsprechend den drei Phasen des Gleichstrommotors sind drei Wicklungen 66, 67, 68 der ersten, zweiten und dritten Phase versetzt zueinander in die Nuten 57 des Statorbleches 55 gelegt. Die Anzahl der Wicklungen pro Phase ist gleich der Anzahl der Nuten (6) geteilt durch die Anzahl der Wicklungen (3) und beträgt somit 2. Fig.5 zeigt den zugehörigen Verlauf der von dem dreiphasigen Gleichstrommotor erzeugten Drehmomente.

Wie in Fig. 5 gezeigt, beträgt der geometrische Versatz der drei Phasen 360° elektrisch ÷ Phasenzahl = 120° elektrisch. Bei dem dreiphasigen Gleichstrommotor entstehen somit keine Drehmomentlücken, und das Drehmoment schwankt zwischen einem minimalen und einem maximalen Drehmomentwert Tₘₐₓ, Tₘᵢₙ, wodurch jedoch noch immer eine gewisse Drehmomentwelligkeit entsteht. Fig. 5 zeigt auch, daß in bestimmten Rotorpositionen (Δt₁₀, Δt₂₀, Δt₃₀) die einzelnen Phasen kein Drehmoment erzeugen.

U.S. Patent 5,973,426 beschreibt einen dreiphasigen Elektromotor, bei dem der Permanentmagnet in drei axiale Abschnitte aufgeteilt ist, die um 120° gegeneinander verdreht sind. Zweck der beschriebenen Anordnung ist es, einen klein bauenden Motor mit hohem Wirkungsgrad anzugeben. Mit den Problemen der Drehmomentwelligkeit oder Drehmomentlükken befaßt sich diese Druckschrift nicht.

WO 99/57795 beschreibt eine Motoranordnung mit zwei unabhängig voneinander arbeitsfähigen Motoren auf einer gemeinsamen Welle. Zweck dieser Anordnung ist es, den Motorbetrieb auch bei Störungen der Erregerschaltung aufrechterhalten zu können.

JP 02254954 zeigt einen Elektromotor mit einem zweigeteilten Stator bzw. einem zweigeteilten Rotor mit in radialer Richtung versetzten Magnetpolen zur Reduzierung des Rastmoments. Weder ist beschrieben, daß die Anzahl der axialen Statorabschnitte der Anzahl der Phasen entspricht, noch ist in dieser Schrift offenbart, daß jeder axiale Statorabschnitt jeweils die Wicklung einer Phase umfaßt.

US 6,042,349 beschreibt einen dreiphasigen Elektromotor mit einem zweigeteilten Stator und einem zweigeteilten Rotor. Die Statorsegmente tragen jeweils Wicklungen aller drei Phasen. Die Entgegenhaltung zeigt somit weder eine Aufteilung des Stators in axiale Abschnitte entsprechend der Anzahl der Phasen, noch die Verteilung der Wicklung jeweils einer Phase auf getrennte axiale Statorabschnitte.

EP1 087 502 A2 zeigt einen Schrittmotor, der unterschiedliche Pollängen der Magnetpole und der Statorpole aufweist. Es ist eine Zweiteilung von Stator und Rotor gezeigt. Auch diese Entgegenhaltung zeigt jedoch nicht, den Stator in einer Anzahl axiale Abschnitte aufzuteilen, welche der Anzahl der Phasen entspricht, noch auf jedem axialen Abschnitt des Stators jeweils die Wicklungen einer Phase vorzusehen.

Im Stand der Technik wurde zur Reduktion des Problems der Drehmomentwelligkeit und zur Aufhebung von Rastmomenten vorgeschlagen, einen Rotor mit einem Permanentmagneten vorzusehen, dessen Pole schräg magnetisiert sind, um ein abruptes Umschalten zwischen den einzelnen Phasen zu vermeiden. Die schräge Magnetisierung der Rotorpole erzeugt jedoch einen axialen Kräfteanteil und somit einen Verlust an Drehmoment.

Der Erfindung liegt die Aufgabe zu Grunde, einen Elektromotor und insbesondere einen elektronisch kommutierten Gleichstrommotor anzugeben, der so aufgebaut ist, daß die Drehmomentwelligkeit verringert und die Drehmomentlücken der einzelnen Phasen aufgehoben werden können. Diese Aufgabe wird durch einen Elektromotor mit den Merkmalen von Anspruch 1 gelöst.

Der erfindungsgemäße Elektromotor weist einen Stator und einen Rotor auf, die zu einer Längsachse des Elektromotors koaxial angeordnet sind. Der Stator umfaßt mehrere elektrische Statorpole und mehrere Phasenwicklungen, und der Rotor umfaßt einen Permanentmagneten mit wenigstens einem Magnetpolpaar, das den Phasenwicklungen zugeordnet ist. Erfindungsgemäß wird die Winkellage der einzelnen Phasen zueinander aufgehoben, indem die Phasenwicklungen und/oder der Permanentmagnet in Richtung der Rotations- oder Längsachse des Elektromotors in mehrere axiale Abschnitte aufgeteilt werden und diese Abschnitte um die Längsachse des Elektromotors gegeneinander verdreht werden. Gemäß der Erfindung werden die Phasenwicklungen des Motors nicht in Umfangsrichtung des Stators auf die Statorpole verteilt, sondern der Motor wird aus mehreren Stapeln oder "Stacks" aufgebaut, die jeweils nur eine Phasenwicklung tragen und in axialer Richtung hintereinander angeordnet sind. Bei einer Alternative der Erfindung ist der Permanentmagnet in Richtung der Längsachse des Elektromotors in mehrere axiale Abschnitte aufgeteilt, wobei jeder Abschnitt des Permanentmagneten wenigstens ein Magnetpolpaar aufweist und die einzelnen Abschnitte um die Längsachse des Motors gegeneinander verdreht sind. Der geometrische Versatz der Winkellagen der einzelnen Motorphasen kann somit durch Aufteilen des Stators in mehrere axiale Statorabschnitte, die jeweils einer Phase entsprechen, und Verdrehung der Statorabschnitte oder "Stacks" zueinander oder durch Aufteilen des Permanentmagneten des Rotors in mehrere axiale Permanentmagnetabschnitte und Verdrehung der Permanentmagnetabschnitte und somit der magnetischen Pole der jeweiligen Abschnitte zueinander erreicht werden.

Erfindungsgemäß ist vorgesehen, daß die Anzahl der axialen Abschnitte des Stators gleich der Anzahl der Phasenwicklungen ist, so daß jeder Statorabschnitt jeweils eine Phasenwicklung aufweist. Vorzugsweise umfaßt der Stator zwei oder drei axiale Abschnitte entsprechend einem zweiphasigen oder einem dreiphasigen Gleichstrommotor. Um eine besonders geringe Drehmomentwelligkeit zu erreichen, sollten die Abschnitte des Stators um jeweils ungefähr 180° elektrisch ÷ (Anzahl der Phasen) gegeneinander verdreht sein. Entsprechendes gilt, wenn an Stelle des Stators der Permanentmagnet in mehrere axiale Abschnitte aufgeteilt ist.

Bei der bevorzugten Ausführungsform der Erfindung ist die Anzahl der Nuten oder elektrischen Statorpole gleich der Anzahl der magnetischen Pole, um einen möglichst gleichmäßigen Drehmomentverlauf zu erhalten.

Die Aufteilung der einzelnen Phasenwicklungen auf mehrere axiale Abschnitte hat den zusätzlichen Vorteil, daß eine vollständige elektrische Trennung der Phasen möglich ist, so daß keine Gegeninduktivitäten oder Streuinduktivitäten durch die gegenseitige Beeinflussung der durch die Wicklungen fließenden Ströme entstehen und der Motor insgesamt weniger störanfällig ist. Durch eine geeignete Ansteuerung der Phasenwicklungen und eine geeignete Auswahl der das Drehmoment bestimmenden Phasen ist es möglich, einen im wesentlichen glatten Drehmomentverlauf zu erhalten.

Die Erfindung ist im folgenden anhand bevorzugter Ausführungsformen mit Bezug auf die Zeichnung näher erläutert. In den Figuren zeigen:
Fig. 1 eine schematische Längs-Schnittdarstellung durch einen Gleichstrommotor gemäß dem Stand der Technik;
Fig. 2 eine schematisch Querschnittdarstellung durch einen zweiphasigen Elektromotor mit vier Statomuten und einem magnetischen Polpaar gemäß dem Stand der Technik;
Fig. 3 einen Drehmomentverlauf, der durch den Motor der Fig. 2 erzeugt wird;
Fig. 4 eine schematische Querschnittdarstellung durch einen dreiphasigen Elektromotor mit sechs Statomuten und zwei magnetischen Polpaaren gemäß dem Stand der Technik;
Fig. 5 einen Drehmomentverlauf, der von dem Motor der Fig. 4 erzeugt wird;
Fig. 6 eine schematische Darstellung des erfindungsgemäßen Gleichstrommotors ohne Gehäuse, Flansche und Lagerungen;
Fig. 7 eine ähnliche Darstellung wie Fig. 6, jedoch mit den Wicklungen für drei Phasen;
Fig. 8 eine Rotorbaugruppe einer alternativen Ausführungsform des erfindungsgemäßen Gleichstrommotors;
Fig. 9 einen beispielhaften Drehmomentverlauf für einen zweiphasigen Gleichstrommotor gemäß der Erfindung;
Fig. 10 einen beispielhaften Drehmomentverlauf für einen dreiphasigen Gleichstrommotor gemäß der Erfindung;
Fig. 11 einen beispielhaften Drehmomenverlauf für einen dreiphasigen Gleichstrommotor gemäß einer weiteren Ausführungsform der Erfindung.

Fig. 1 zeigt grundsätzlich den Aufbau eines elektronisch kommutierten Gleichstrommotors gemäß einer Innenläuferbauweise des Standes der Technik. Der Motor umfaßt eine Rotorbaugruppe 6 und eine Statorbaugruppe 8. Die Rotorbaugruppe 6 weist eine Rotorwelle 10 auf, die einen Rückschlußring 12 aus einem weich magnetischen Material, wie Eisen, trägt. Auf dem Rückschlußring 12 ist ein segmentierter oder ringförmiger Permanentmagnet 14 aufgebracht. Die Welle 10 ist in Lagern 16, 18 drehbar gelagert. Die Rotorbaugruppe 6, hier mit der Rotorwelle 10, dem Rückschlußring 12 und dem/den Permanentmagneten 14 dargestellt, befindet sich innerhalb der Statorbaugruppe 8, dargestellt durch ein mit Wicklungen 60 versehenes Blechpaket, welches aus einer Vielzahl von Statorblechen 55 besteht. Der Stator ist mit einem Flansch 24 verbunden, wobei die Rotorbaugruppe 6 in dem Flansch 24 durch das Lager 18 und in einer Stirnkappe 20 durch das Lager 16 gelagert ist. Der Flansch 24 und die Abschlußkappe 20 sind mit einem Motorgehäuse 4 verbunden. Der Flansch 24 dient auch zur Befestigung des Gleichstrommotors an einem Chassis oder dergleichen mittels der Bohrungen 32. Fig. 1 zeigt einen Gleichstrommotor mit seinen Grundelementen gemäß dem Stand der Technik; sie dient zur Erläuterung des Hintergrunds der Erfindung.

Die Figuren 2 und 4, welche bereits beschrieben wurden, zeigen schematisch eine Querschnittdarstellung durch einen Elektromotor gemäß dem Stand der Technik, und die Figuren 3 und 5 zeigen die von solchen Elektromotoren erzeugten Drehmomentverläufe.

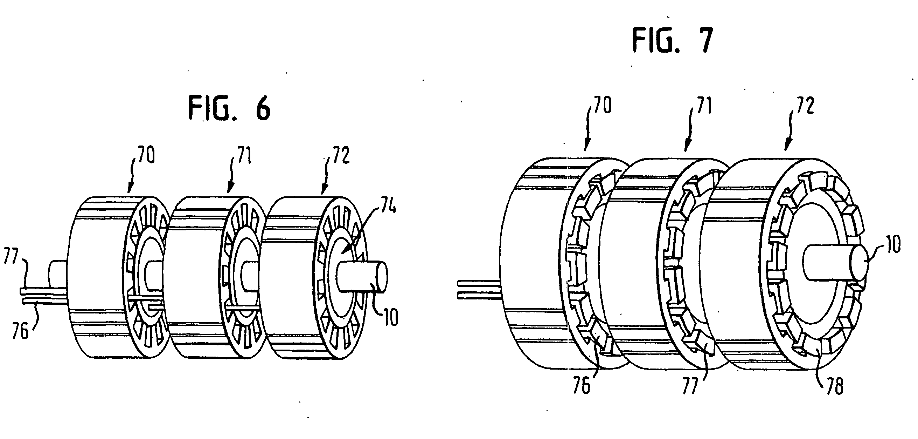

Fig. 6 zeigt eine schematische Darstellung des erfindungsgemäßen Gleichstrommotors mit drei axialen Statorabschnitten 70, 71, 72, der Rotorwelle 10 und einem innerhalb der Statorabschnitte 70, 71, 72 angeordneten, ebenfalls in axialer Abschnitte aufteilten Permanentmagneten 74, der auf einem Eisenrückschlußring sitzt. Der Permanentmagnet 74 kann bei dieser Ausführungsform, wie in Fig. 6 gezeigt, in axiale Abschnitte aufgeteilt sein oder sich über die gesamte axiale Länge der Statorbaugruppe erstrecken. In Fig. 6 sind der Deutlichkeithalber das Gehäuse, Flansche und Lager weggelassen; Phasenwicklungen 76, 77 sind lediglich angedeutet. Fig. 7 zeigt eine ähnliche Darstellung wie Fig. 6, jedoch mit den Wicklungen 76, 77, 78 für drei Phasen. Bei den in Figuren 6 und 7 gezeigten Ausführungsformen des erfindungsgemäßen Motors sind die drei Statorabschnitte 70, 71, 72 in axialer Richtung des Elektromotors hintereinander angeordnet und um die Rotationsachse des Motors gegeneinander um einen vorgegebenen Winkel verdreht, wobei die Größe der Verdrehung abhängig ist von der Anzahl der magnetischen Pole und der gewünschten Überlappung des Drehmomentverlaufs der einzelnen Phasen.

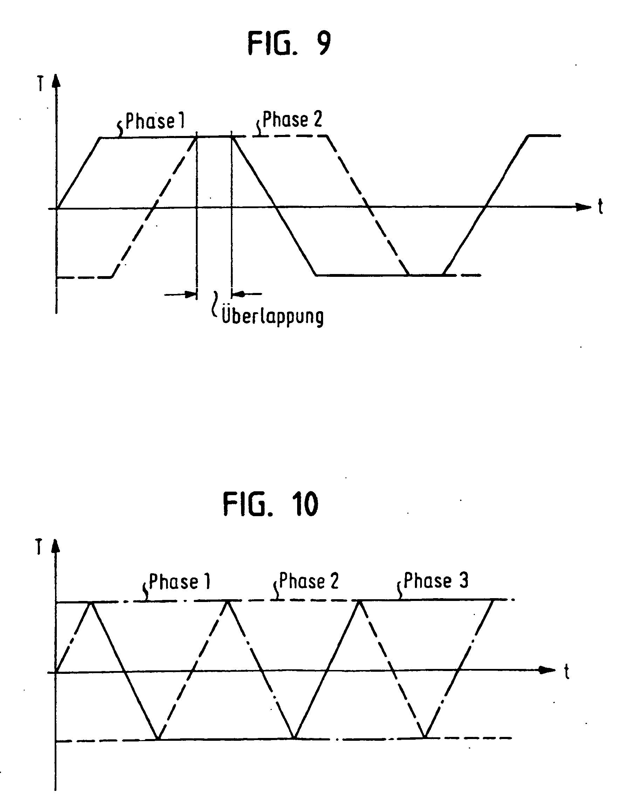

Bei einer bevorzugten Ausführungsform der Erfindung ist die Anzahl der Nuten der einzelnen Statorabschnitte 70, 71, 72 gleich der Anzahl der magnetische Pole des zugeordneten Permanentmagneten 74. Die Größe der Verdrehung wird so gewählt, daß die gewünschte Überlappung der Drehmomente (Fig. 9, Fig. 10) entsteht. Bei einer Ausführungsform sind die Abschnitte des Stators um ungefähr N = 180° ÷ (Anzahl der Phasenwicklungen) gegeneinander verdreht.

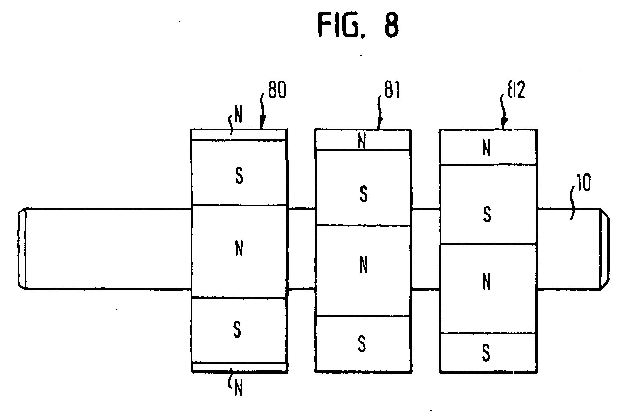

Fig. 8 zeigt eine weitere Ausführungsform der Erfindung, wobei in Fig. 8 nur die Rotorwelle 10 mit den Rotormagneten 80, 81, 82 dargestellt sind, die eine Rotorbaugruppe bilden, welche in eine Statorbaugruppe (in Fig. 8 nicht gezeigt) gemäß den Figuren 6 und 7 eingefügt werden können. Bei der in Fig. 8 gezeigten Ausführungsform trägt die Rotorwelle 10 drei axiale Permanentmagnetabschnitte 80, 81, 82, die jeweils vier Magnetpolpaare aufweisen, welche gegeneinander verdreht sind. Die Rotorbaugruppe der Fig. 8 kann mit einer Statoreinheit gemäß der Erfindung, wie sie in den Figuren 6 und 7 dargestellt ist, kombiniert werden. Im zuletzt genannten Fall können die axialen Magnetabschnitte 80, 81, 82, die axialen Statorabschnitte 70, 71, 72 oder beide Baugruppen gegeneinander verdreht sein. Ziel der erfindungsgemäßen Anordnung der axialen Statorabschnitte bzw. der axialen Rotorabschnitte ist eine gezielte Beeinflussung des erzeugten Drehmomentverlauf derart, daß sich die Drehmomentkurven der einzelnen Phasen so überlappen, daß Drehmomentlücken aufgehoben und die Drehmomentwelligkeit reduziert werden.

Fig. 9 zeigt den Drehmomentverlauf für einen zweiphasen Gleichstrommotor gemäß der Erfindung, wobei angenommen wird, daß die axialen Statorabschnitte jeweils vier Nuten und der Permanentmagnet zwei Polpaare aufweisen. Bei der im Fig. 9 gezeigten Ausführungsform sind die Statorabschnitte und somit die zugehörigen Phasen so gegeneinander verdreht, so daß sich der Drehmomentverlauf der einzelnen Phasen, im Vergleich zu Fig. 3, überlappt. Wenn der zweiphasige Gleichstrommotor mit dem in Fig. 9 gezeigten Drehmomentverlauf so angesteuert wird, daß die Phasen im Bereich der Überlappung umgeschaltet werden, kann im Ergebnis ein glatter Drehmomentverlauf, ohne Drehmomenteinbruch und ohne Drehmomentwelligkeit erzeugt werden. Wenn ein ausreichend großer Überlappungsbereich vorgesehen wird, wird der Motor im Betrieb zusätzlich unempfindlich gegen geringfügige Verschiebungen des Schaltzeitpunktes sein. Dies gilt für einen zweiphasigen Gleichstrommotor im unipolaren Betrieb, d.h. wenn immer nur eine Phasenwicklung bestromt wird. Im bipolaren Betrieb könnte das Drehmoment des Motors noch erhöht werden, indem die Drehmomente der Phase 1 und der Phase 2 addiert werden. In diesem Fall würde zwar eine Drehmomentwelligkeit, jedoch auf keinen Fall eine Lücke im Drehmomentverlauf erzeugt werden.

In Fig. 9 erkennt man, daß ohne geeignete Umschaltung der Phasen, Phase 1 und Phase 2, noch eine Drehmomentlücke zwischen dem Abfall der Phase 2 und dem Anstieg der Phase 1 entsteht. Diese Lücke kann durch das Vorsehen eines dritten Statorabschnitts oder "Stacks" in einem dreiphasigen Gleichstrommotor gemäß der Erfindung geschlossen werden.

Fig. 10 zeigt einen beispielhaften Drehmomentverlauf für einen dreiphasigen Gleichstrommotor mit drei axialen Statorabschnitten gemäß der Erfindung. Bei diesem Beispiel sei angenommen, daß jeder Statorabschnitt sechs Statomuten und der Permanentmagnet drei Magnetpolpaare aufweist. Die Statorabschnitte, die jeweils einer Phasen entsprechen, sind um 120° gegeneinander verdreht.

Zu Erzeugung des in Fig. 10 gezeigten Drehmomentverlaufs sind die einzelnen axialen Statorabschnitte und somit die Phasen genau um 120° versetzt, so daß keine Überlappung der Drehmomentkurven der einzelnen Phasen entsteht. Sofern die Schaltzeitpunkte zum Umschalten der einzelnen Phasen exakt eingehalten werden, ergibt sich ein glatter Drehmomentverlauf, ohne Drehmomentlücke und ohne Drehmomentwelligkeit. Man erkennt aus der Darstellung der Fig. 10 jedoch, daß dann, wenn Fehler in den Schaltzeitpunkten auftreten, eine geringe Drehmomentwelligkeit entstehen wird. Eine Drehmomentwelligkeit könnte sich auch daraus ergeben, daß der Verlauf der Drehmomentkurven in der Praxis nicht exakt der Darstellung der Fig. 10 entspricht, sondern daß die ansteigenden und abfallenden Flanken der einzelnen Phasen weniger steil sind.

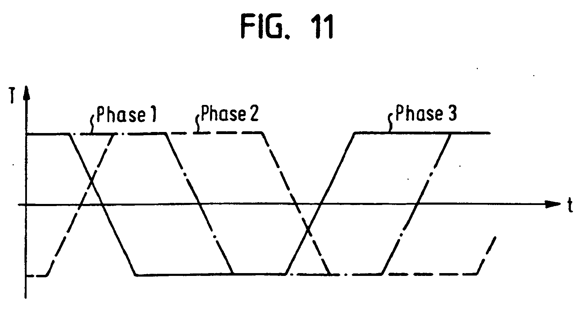

Dieses Problem kann dadurch gelöst werden, daß die einzelnen axialen Statorabschnitte und somit die Phasen um weniger als 120° verdreht werden, so daß wiederum eine Überlappung der Drehmomentkurven der einzelnen Phasen entsteht. Dies ist in Fig. 11 gezeigt. Durch eine geeignete Ansteuerung der Phasen des dreiphasigen Gleichstrommotors und insbesondere durch Umschalten der Phasen jeweils im Überlappungsbereich kann ein glatter Drehmomentverlauf ohne Drehmomentlücken erzeugt werden. Aufgrund der Überlappung der einzelnen Phasen ist sichergestellt, daß geringfügige Schaltzeitfehler beim Umschalten der einzelnen Phasen sich auf den Drehmomentverlauf nicht auswirken.

Wie in Fig. 11 gezeigt, entsteht durch die Verschiebung der Phasen eine Lücke, die jedoch durch geeignete Ansteuerung der einzelnen Phasenwicklung ausgeglichen werden kann. Darüber hinaus könnte diese Lücke durch das Hinzufügen einer weiteren Phase geschlossen werden.

### Bezugszeichenliste

- Motorgehäuse / Gehäuse: 4
- Rotorbaugruppe: 6
- Statorbaugruppe: 8
- Rotorwelle: 10
- Rückschlußring: 12
- Permanentmagnet: 14
- Lager: 16, 18
- Stirnkappe: 20
- Flansch: 24
- Bohrungen: 32
- Magnetisches Polpaar: 42, 44
- Magnetische Polpaare: 46, 48
- Statorblech: 52; 55
- Elektrische Pole: 53
- Statornuten: 54
- Pole: 56
- Statomuten: 57
- Phasenwicklungen: 60, 62, 64, 66, 67, 68
- Statorabschnitte: 70, 71, 72
- Permanentmagnet: 74
- Phasenwicklungen: 76, 77, 78
- Permanentmagnetabschnitte: 80, 81, 82

## Patentansprüche

1. Elektromotor mit einem Stator und einem Rotor, die zu einer Längsachse des Elektromotors konzentrisch angeordnet sind, wobei der Stator mehrere elektrische Statorpole (53) und mehrere Phasenwicklungen (76-78) aufweist und der Rotor einen Permanentmagneten (14; 74) mit wenigstens einem Magnetpolpaar (42-48) aufweist, das den Phasenwicklungen (76-78) zugeordnet ist, wobei die Phasenwicklungen (76-78) und/oder der Permanentmagnet (14; 74) in Richtung der Längsachse des Elektromotors in mehrere axiale Abschnitte (70, 71, 72; 80, 81, 82) aufgeteilt sind und diese Abschnitte um die Längsachse des Elektromotors um jeweils N° verdreht sind, wobei N° ≠ 360° ÷ (Anzahl der Phasen), so daß die Drehmomentkurven der einzelnen Phasen einander überlappen, und wobei der Stator in Richtung der Längsachse des Elektromotors in eine der Anzahl der Phasen (76-78) entsprechende Anzahl von axialen Abschnitten (70, 71, 72) aufgeteilt ist und jeder Abschnitt des Stator mehrere elektrische Statorpole (53) und jeweils eine Phasenwicklung (76-78) umfaßt.

2. Elektromotor nach Anspruch 1, **dadurch gekennzeichnet, daß** der Stator in zwei oder drei axiale Abschnitte (70, 71, 72) aufgeteilt ist.

3. Elektromotor nach Anspruch 1 oder 2, **dadurch gekennzeichnet, daß** die Abschnitte (70, 71, 72) des Stators um jeweils ungefähr M° = 180° elektrisch ÷ (Anzahl der Phasen) gegeneinander verdreht sind.

4. Elektromotor nach einem der vorangehenden Ansprüche, daß der Permanentmagnet (14; 74) in Richtung der Längsachse des Elektromotors in eine der Anzahl der Phasen (76-78) entsprechende Anzahl von axialen Abschnitten (80, 81, 82) aufgeteilt ist und jeder Abschnitt des Permanentmagneten gleich viele Magnetpolpaare aufweist.

5. Elektromotor nach einem der vorangehenden Ansprüche, **dadurch gekennzeichnet, daß** der Permanentmagnet (14; 74) in zwei oder drei axiale Abschnitte (80, 81, 82) aufgeteilt ist.

6. Elektromotor nach Anspruch 4 oder 5, **dadurch gekennzeichnet, daß** die Abschnitte (80, 81, 82) des Permanentmagneten (14; 74) derart gegeneinander verdreht sind, daß sich jeweils negative und positive Magnetpole überlappen.

7. Elektromotor nach einem der vorangehenden Ansprüche, **dadurch gekennzeichnet, daß** die Anzahl der elektrischen Statorpole (53) gleich der Anzahl der Magnetpole ist.

8. Elektromotor nach einem der vorangehenden Ansprüche, **dadurch gekennzeichnet, daß** die mehreren Abschnitte des Stators mit Phasenwicklungen und/oder des Permanentmagneten in Richtung der Längsachse des Elektromotors mit Abstand zueinander angeordnet sind.

9. Elektromotor nach einem der vorangehenden Ansprüche, **dadurch gekennzeichnet, daß** er ein elektronisch kommutierter Gleichstrommotor ist.

## Claims

1. An electric motor having a stator and a rotor which are arranged concentrically to a longitudinal axis of the electric motor, whereby the stator comprises a plurality of electrical stator poles (53) and a plurality of phase windings (76-78) and the rotor comprises a permanent magnet (14; 74) with a least one magnetic pole pair (42-48) which is associated to the phase windings (76-78), wherein the phase windings (76-78) and/or the permanent magnet (14; 74) are divided into several axial sections (70, 71, 72; 80, 81, 82) in the direction of the longitudinal axis of the electric motor and these sections are staggered around the longitudinal axis of the electric motor by N°, whereby N° ≠ 360° ÷ (number of phases), so that the torque curves of the individual phases overlap each other, and wherein
the stator is divided in the direction of the longitudinal axis of the electric motor into a number of axial sections (70, 71, 72) corresponding to the number of phase windings (76-78) and each stator section includes several electrical stator poles (53) and a phase winding (76-78).

2. An electric motor according to claim 1, **characterized in that** the stator is divided into two or three axial sections (70, 71, 72).

3. An electric motor according to claim 1 or 2, **characterized in that** the stator sections (70, 71, 72) are staggered by approximately M° = 180 electrical degrees ÷ (number of phases).

4. An electric motor according to one of the above claims, **characterized in that** the permanent magnet (14; 74) is divided in the direction of the longitudinal axis of the electric motor into a number of axial sections (80, 81, 82) corresponding to the number of phase windings (76-78) and each permanent magnet section has the same number of magnetic pole pairs.

5. An electric motor according to one of the above claims, **characterized in that** the permanent magnet (14; 74) is divided into two or three axial sections (80, 81, 82).

6. An electric motor according to claim 4 or 5, **characterized in that** the sections (80, 81, 82) of the permanent magnet (14; 74) are staggered in relation to each other in such a way that the negative and positive magnetic poles overlap.

7. An electric motor according to one of the above claims, **characterized in that** the number of electrical stator poles (53) is equal to the number of magnetic poles.

8. An electric motor according to one of the above claims, **characterized in that** the several stator sections with phase windings and/or the permanent magnet sections are arranged in the direction of the longitudinal axis of the electric motor with a space between each other.

9. An electric motor according to one of the above claims, **characterized in that** the electric motor is an electronically commutated direct current motor.

## Revendications

1. Electromoteur comprenant un stator et un rotor qui sont agencés concentriquement par rapport à un axe longitudinal de l'électromoteur, dans lequel le stator présente plusieurs pôles de stator électriques (53) et plusieurs bobines de phase (76-78) et dans lequel le rotor présente un aimant permanent (14 ; 74) comportant au moins une paire de pôles magnétiques (42-48) qui est attribuée aux bobines de phase (76-78), les bobines de phase (76-78) et/ou l'aimant permanent (14 ; 74) étant divisés en direction de l'axe longitudinal de l'électromoteur en plusieurs tronçons axiaux (70, 71, 72 ; 80, 81, 82) et ces tronçons étant tournés respectivement de N° autour de l'axe longitudinal de l'électromoteur, N° étant ≠ 360° / (le nombre de phases), de sorte que les courbes des couples de rotation des phases individuelles se chevauchent l'une l'autre, et dans lequel le stator est divisé en direction de l'axe longitudinal de l'électromoteur en un certain nombre de tronçons axiaux (70, 71, 72) qui correspond au nombre de phases (76-78) et dans lequel chaque tronçon du stator comporte plusieurs pôles de stator électriques (53) et respectivement une bobine de phase (7.6-78).

2. Electromoteur selon la revendication 1, **caractérisé en ce que** le stator est divisé en deux ou trois tronçons axiaux (70, 71, 72).

3. Electromoteur selon la revendication 1 ou 2, **caractérisé en ce que** les tronçons (70, 71, 72) du stator sont tournés l'un à l'encontre de l'autre, de respectivement M° = 180° électrique / (le nombre de phases).

4. Electromoteur selon l'une des revendications précédentes, **caractérisé en ce que** l'aimant permanent (14 ; 74) est divisé en direction de l'axe longitudinal de l'électromoteur en un certain nombre de tronçons axiaux (80, 81, 82) qui correspond au nombre de phases (76-78) et **en ce que** chaque tronçon de l'aimant permanent présente le même nombre de paires de pôles.

5. Electromoteur selon l'une des revendications précédentes, **caractérisé en ce que** l'aimant permanent (14 ; 74) est divisé en deux ou trois tronçons axiaux (80, 81, 82).

6. Electromoteur selon la revendication 4 ou 5, **caractérisé en ce que** les tronçons (80, 81, 82) de l'aimant permanent (14 ; 74) sont tournés l'un à l'encontre de l'autre de sorte que les pôles magnétiques négatifs et positifs se chevauchent respectivement.

7. Electromoteur selon l'une des revendications précédentes, **caractérisé en ce que** le nombre de pôles de stator électriques (53) est égal au nombre de pôles magnétiques.

8. Electromoteur selon l'une des revendications précédentes, **caractérisé en ce que** les plusieurs tronçons du stator sont agencés à distance les uns des autres avec des bobines de phase et/ou des aimants permanents en direction de l'axe longitudinal de l'électromoteur.

9. Electromoteur selon l'une des revendications précédentes, **caractérisé en ce qu'**il est un moteur à courant continu commuté électroniquement.
